(19) Europäisches Patentamt
European Patent Office
Office européen des brevets

(11) EP 0 770 639 B1

(12) EUROPÄISCHE PATENTSCHRIFT

(45) Veröffentlichungstag und Bekanntmachung des Hinweises auf die Patenterteilung:
**23.04.2003 Patentblatt 2003/17**

(51) Int Cl.[7]: **C08J 3/12**, C08L 101/00
// (C08L101/00, 33:14, 33:26)

(21) Anmeldenummer: **96116467.0**

(22) Anmeldetag: **15.10.1996**

(54) **Verwendung von polymerisaten als Hilfsmittel bei der Trocknung wässriger Polymerisatdispersionen**

Use of polymers as auxiliary agents in drying aqueous polymer dispersions

Utilisation de polymères comme adjuvants dans le séchage de dispersions aqueuses de polymères

(84) Benannte Vertragsstaaten:
**AT BE CH DE DK ES FI FR GB GR IE IT LI NL PT SE**

(30) Priorität: **24.10.1995 DE 19539460**
**24.01.1996 DE 19602391**

(43) Veröffentlichungstag der Anmeldung:
**02.05.1997 Patentblatt 1997/18**

(73) Patentinhaber: **BASF AKTIENGESELLSCHAFT**
**67056 Ludwigshafen (DE)**

(72) Erfinder:
- **Pakusch, Joachim, Dr.**
  **67065 Ludwigshafen (DE)**
- **Schuler, Bernhard, Dr.**
  **68199 Mannheim (DE)**
- **Mächtle, Walter, Dr.**
  **67067 Ludwigshafen (DE)**
- **Baumstark, Roland, Dr.**
  **67434 Neustadt (DE)**

(56) Entgegenhaltungen:
**EP-A- 0 003 235**
**EP-A- 0 562 344**
**EP-A- 0 629 650**
**EP-A- 0 671 435**
**US-A- 3 965 032**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft die Verwendung von Polymerisaten I, die in polymerisierter Form zu > 80 bis 100 Gew.-% aus wenigstens einem Monomeren der allgemeinen Formel I und/oder deren Salzen (Monomere a)

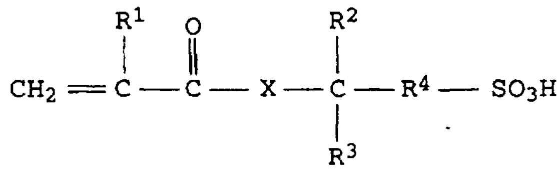

(I),

mit

$R^1$, $R^2$, $R^3$: unabhängig voneinander H oder $C_1$- bis $C_3$-Alkyl,
$R^4$: $C_1$- bis $C_5$-Alkylen und
X: O oder NH,

und
zu 0 bis < 20 Gew.-% aus wenigstens einem radikalisch copolymerisierbaren Monomeren (Monomere b)
aufgebaut sind und dessen relatives gewichtsmittler Molekulargewicht 5000 bis 35.000 beträgt, , als Hilfsmittel bei der Trocknung wäßriger Dispersionen von von den Polymerisaten I verschiedenen Polymerisaten II.

Außerdem betrifft die vorliegende Erfindung die im Rahmen der Trocknung anfallenden, in Wasser redispergierbaren, Polymerisatpulver und die Verwendung dieser Pulver (z.B. als Additiv in mineralischen Bindemitteln oder als Bindemittel von Kunstharz-Putzen) sowie zur Herstellung der Pulver erforderliche Dispersionen von Polymerisaten II.

Wäßrige Polymerisatdispersionen sind allgemein bekannt. Es handelt sich um Systeme, die im wesentlichen kugelförmige Knäuel aus ineinander verschlungenen Polymerisatketten (sogenannte Polymerisatteilchen) in disperser Verteilung enthalten. Ebenso wie Polymerisatlösungen beim Verdampfen des Lösungsmittels, weisen wäßrige Polymerisatdispersionen beim Verdampfen des wäßrigen Dispergiermediums das Potential zur Ausbildung von Polymerisatfilmen auf, weshalb sie insbesondere als Bindemittel, Klebstoffe und Beschichtungsmittel Anwendung finden. Für die Eigenschaften wäßriger Polymerisatdispersionen von zentraler Bedeutung ist die Größe der in ihnen in disperser Verteilung enthaltenen Polymerisatteilchen. Insbesondere Eigenschaften wie die Viskosität der wäßrigen Polymerisatdispersion oder der Glanz ihrer Verfilmungen sind vom Durchmesser der dispergierten Polymerisatteilchen bzw., genauer, von der Durchmesserverteilungsfunktion der dispergierten Polymerisatteilchen abhängig (Verfilmungen kleiner Polymerisatteilchen weisen bei identischem Polymerisat in der Regel einen höheren Glanz auf; eine breite Durchmesserverteilung bedingt in der Regel eine geringere Viskosität der wäßrigen Polymerisatdispersion; Dispersionen kleiner Polymerisatteilchen verfügen in der Regel über ein größeres Pigmentbindevermögen etc.).

Nachteilig an der Applikationsform "wäßrige Polymerisatdispersion" ist jedoch, daß ihr Herstellort in der Regel vom Gebrauchsort verschieden ist. Ihr Transport vom Herstellort zum Gebrauchsort impliziert jedoch neben dem Transport des letztlich den Polymerisatfilm im wesentlichen alleine konstituierenden Polymerisats zusätzlich stets den Transport des überall leicht verfügbaren Dispergiermediums "Wasser". Auch können wäßrige Polymerisatdispersionen mineralischen Bindemitteln zum Zwecke deren Modifikation erst am Gebrauchsort zugesetzt werden, da diese ansonsten vor Gebrauch aushärten.

Eine wünschenswerte Erscheinungsform einer jeden wäßrigen Polymerisatdispersion ist daher diejenige ihres bei Zusatz von Wasser redispergierenden Polymerisatpulvers.

Prinzipiell sind bei Zusatz von Wasser redispergierbare Polymerisatpulver durch Trocknung ihrer wäßrigen Polymerisatdispersionen zugänglich. Beispiele für solche Trocknungsverfahren sind die Gefriertrocknung und die Sprühtrocknung. Letztere Methode, bei der die Polymerisatdispersion in einem Warmluftstrom versprüht und entwässert wird, ist insbesondere zweckmäßig zur Erzeugung großer Pulvermengen. Vorzugsweise werden die Trockenluft und die versprühte Dispersion dabei im Gleichstrom durch den Trockner geführt (vgl. z.B. EP-A 262326 oder EP-A 407889).

Nachteilig an den durch Trocknung wäßriger Polymerisatdispersionen erzeugten Polymerisatpulvern ist jedoch, daß ihre Redispergierbarkeit bei Zusatz von Wasser in der Regel insofern nicht voll zu befriedigen vermag, als die bei der Redispergierung resultierende Polymerisatteilchendurchmesserverteilung in der Regel von derjenigen in der wäßrigen Ausgangsdispersion (Primärteilchendurchmesserverteilung) verschieden ist.

Dieser Sachverhalt rührt daher, daß wäßrige Polymerisatdispersionen keine thermodynamisch stabilen Systeme bilden. Vielmehr versucht das System, die Grenzfläche Polymerisat/Dispergiermedium durch Vereinigung von kleinen Primärteilchen zu größeren Sekundärteilchen (z.B. Stippen, Koagulat) zu verkleinern, was im Zustand der dispersen Verteilung im wäßrigen Medium durch Zusatz von Dispergiermittel für längere Zeit verhindert werden kann. Im Rahmen der Trocknung reicht nun aber die Trennwirkung der Dispergiermittel häufig nicht mehr aus und es kommt in bestimmtem Umfang zu irreversibler Sekundärteilchenbildung. D.h., die Sekundärteilchen bleiben bei der Redispergierung als solche erhalten und mindern die anwendungstechnischen Eigenschaften der im Rahmen der Redispergierung erhältlichen wäßrigen Polymerisatdispersion.

Es ist nun seit längerem bekannt, daß es Stoffe gibt, deren Zusatz zu wäßrigen Polymerisatdispersionen das Erscheinungsbild irreversibler Sekundärteilchenbildung beim Trocknen reduziert. Diese Stoffe werden unter dem Oberbegriff Trocknungshilfsmittel zusammengefaßt. Sie sind vielfach insbesondere als Sprühhilfsmittel bekannt, da die Sprühtrocknung in besonderem Ausmaß die Ausbildung irreversibler Sekundärteilchen promoviert. Gleichzeitig mindern sie in der Regel die Ausbildung von an der Trocknerwand haften bleibendem Polymerbelag bei der Sprühtrocknung und bewirken so eine Erhöhung der Pulverausbeute.

Aus der EP-A 629650 ist bekannt, daß Polymerisate (Polymerisate III), die durch radikalische Polymerisation von Monomerengemischen aus 15 bis 80 Gew.-% wenigstens eines Monomeren der allgemeinen Formel I und 20 bis 85 Gew.-% radikalisch copolymerisierbaren Monomeren in wäßrigem Medium erhältlich sind, als Sprühhilfsmittel bei der Sprühtrocknung von wäßrigen Polymerisatdispersionen geeignet sind. Die US-3965032 betrifft die Verwendung von Polymerisaten III als Dispergiermittel in wäßrigen Polymerisatdispersionen. Nachteilig an den Polymerisaten III der EP-A 629650 ist jedoch, daß sie bezüglich ihrer Verwendung als Hilfsmittel bei der Trocknung wäßriger Polymerisatdispersionen nicht voll zu befriedigen vermögen.

Aufgabe der vorliegenden Erfindung war es daher, die Verwendung von für die Trocknung wäßriger Polymerisatdispersionen besser geeigneten Hilfsmitteln zur Verfügung zu stellen. Demgemäß wurde die eingangs definierte Verwendung von Polymerisaten I gefunden.

Polymerisate I sowie Verfahren zu ihrer Herstellung in den unterschiedlichsten Molekulargewichten sind allgemein bekannt.

Die JP-A 2/173108 beschreibt z.B. die Herstellung von Homo- und Copolymerisaten der 2-Acrylamido-2-methylpropansulfonsäure und deren Salzen. Als Verwendungsmöglichkeit für diese Polymerisate sieht die JP-A 2/173108 allein den Einsatz als Dispergiermittel für anorganische Materialien in wäßrigem Medium.

Aus der US-A 5 294 686 ist ein Verfahren zur Herstellung niedermolekularer 2-Acrylamido-2-methylpropansulfonsäure-Polymerisate und deren Verwendung als Dispergiermittel und Korrosionsinhibitor bekannt.

Die JP-A 6/122842 betrifft die Herstellung von Polymerisaten I und deren Verwendung als Additiv in Unterwasserantifoulingmitteln.

Die US-3 936 400 empfiehlt niedermolekulare 2-Acrylamido-2-methylpropansulfonsäure-Polymerisate als Viskositätsregler in der Ölförderung.

Die AU-A 35611/84 betrifft wasserlösliche Polymerisate, die Carboxyl-, Sulfat- oder Sulfonsäuregruppen enthalten und durch -OH, -COOH oder $C_{1-3}$-Alkylgruppen terminiert werden. Diese Polymerisate werden als Dispergiermittel für partikuläre Materialien empfohlen.

Die EP-A 123329 empfiehlt u.a. Copolymerisate aus Acrylsäure und 2-Acrylamido-2-methylpropansulfonsäure als Dispergiermittel in wäßrigen Pigmentdispersionen.

Die US-469816 offenbart die Verwendung einer Mischung von zwei Polymerisaten zur Dispergierung von einem aus Partikeln bestehenden Material. Eines der Mischungspolymerisate ist Polyacrylsäure, das andere ist Poly-2-Acrylamido-2-methylpropansulfonsäure.

Die DE-A 3232811 betrifft die Herstellung von Mikrokapseln mit Polyharnstoff-Kapselwänden in Anwesenheit von speziellen sulfonsäuregruppenhaltigen Polymerisaten. Als solche werden u.a. Homopolymerisate der 2-Acrylamido-2-methylpropansulfonsäure mit einem relativen Molekulargewicht von 5000 bis $10^7$ eingesetzt.

Die EP-A 511520 empfiehlt u.a. die Verwendung von Polymerisaten I als Dispergiermittel für die Herstellung emulgatorfreier wäßriger Polymerisatdispersionen.

Bevorzugt enthalten erfindungsgemäß zu verwendende Polymerisate I solche Monomeren a einpolymerisiert, in denen $R^1$, $R^2$, $R^3$, unabhängig voneinander, H oder $CH_3$ ist. Ferner sind Monomere a von Vorteil, in denen X NH ist. Als $R^4$ ist $C_1$- bis $C_3$-Alkylen vorteilhaft. Ganz besonders bevorzugt wird als Monomeres a 2-Acrylamido-2-methylpropansulfonsäure (bzw. deren Salze) eingesetzt, d.h., das Monomere der allgemeinen Formel I, in dem $R^1$ = H, $R^2$ und $R^3$ = $CH_3$, $R^4$ = $-CH_2-$ und X = NH ist.

Geeignete Monomere a in Salzform sind insbesondere Alkalimetall-(z.B. Li, Na, K)- und Erdalkalimetall-(Ca, Mg)-Salze, aber auch Salze, die durch Neutralisation der freien Säure mittels organischen Aminen oder Ammoniak erhältlich sind. Im erfindungsgemäßen Sinn geeignete Polymerisate I sind also z.B. solche, deren Gewichtsanteil an einpolymerisierten Monomeren a wenigstens 85, oder wenigstens 90, oder wenigstens 95 oder 100 Gew.-% beträgt.

Als Monomere b kommen alle von den Monomeren a verschiedenen radikalisch polymerisierbaren Monomeren in Betracht. Dies sind z.B. monoethylenisch ungesättigte Monomere wie Olefine, z.B. Ethylen oder Propylen, vinylaromatische Monomere wie Styrol, α-Methylstyrol, o-Chlorstyrol oder Vinyltoluole, Ester aus Vinylalkohol und 1 bis 18 C-Atome aufweisenden Monocarbonsäuren wie Vinylacetat, Vinylpropionat, Vinyl-n-butyrat, Vinyllaurat und Vinylstearat, Ester aus vorzugsweise 3 bis 6 C-Atome aufweisenden α,β-monoethylenisch ungesättigten Mono- und Dicarbonsäuren, wie Acrylsäure, Methacrylsäure, Fumarsäure und Itaconsäure, mit im allgemeinen 1 bis 12, häufig 1 bis 8 und meist 1 bis 4 C-Atome aufweisenden Alkanolen wie insbesondere Acrylsäure- und Methacrylsäuremethyl-, -ethyl-, -n-butyl-, -iso-butyl-, -tert.-butyl- und -2-ethylhexylester, Maleinsäuredimethylester oder Maleinsäure-n-butylester, die Nitrile der vorgenannten α,β-monoethylenisch ungesättigten Carbonsäuren wie Acrylnitril sowie $C_{4-8}$-konjugierte Diene wie 1,3-Butadien und Isopren. Weitere geeignete Monomere b sind 3 bis 6 C-Atome aufweisende α,β-monoethylenisch ungesättigte Mono- und Dicarbonsäuren und deren Amide wie z.B. Acrylsäure, Methacrylsäure, Maleinsäure, Fumarsäure, Itaconsäure, Acrylamid und Methacrylamid, die Monoester dieser Carbonsäuren mit mehrwertigen Alkoholen wie Hydroxyethylacrylat, Hydroxypropylacrylat, ferner Vinylsulfonsäure sowie N-Vinylpyrrolidon.

Enthält das erfindungsgemäß zu verwendende Polymerisat I keine Monomeren b einpolymerisiert, wird es in der Regel ein Homopolymerisat eines Monomeren I, z.B. der 2-Acrylamido-2-methylpropansulfonsäure oder eines ihrer Salze, sein. Das gewichtsmittlere relative Molekulargewicht $\overline{M}_w$ von erfindungsgemäß zu verwendenden Polymerisaten I (bezogen auf die vollneutraliesierte Na-Salz Form) kann z.B. 1000 bis $10^6$, aber auch 2000 bis $5 \cdot 10^5$ oder 5000 bis $10^5$ oder 1000 bis 45000 oder 7500 bis 35000 oder 10 000 bis 25 000 betragen.

Bezugbasis für die vorgenannten Angaben ist im Fall der in der Regel wasserlöslichen Na-Salze der Polymerisate I eine Molekulargewichtsbestimmung nach der Methode der Gelpermationschromatographie unter Anwendung von vier hintereinander gestalteten Säulen

1. Innendurchmesser : 7,8 mm, Länge : 30 cm, Trennmaterial : Toso Hass TSK PW-XL 5000,
2. Innendurchmesser : 7,8 mm, Länge : 30 cm, Trennmaterial : Waters Ultrahydrogel 1000,
3. Innendurchmesser : 7,8 mm, Länge : 30 cm, Trennmaterial : Waters Ultrahydrogel 500,
4. Innendurchmesser : 7,8 mm, Länge : 30 cm, Trennmaterial : Waters Ultrahydrogel 500.

Aufgegeben werden 200 µl einer 0,1 gew.-%igen wäßrigen Lösung des mit Natriumhydroxid neutralisierten Polymerisats I. Die Säulen werden auf 35°C temperiert. Als Elutionsmittel wird eine wäßrige 0,08 molare Lösung eines TRIS-Puffer (pH 7) verwendet, dem 0,15 mol/l NaCl bzw. 0,01 mol/l $NaN_3$ zugesetzt werden. Die Durchflußgeschwindigkeit des Eluiermittels wird zu 0,5 ml/min gewählt. Vor der Probenaufgabe wird die Probe durch ein Filter der Marke Sartorius Minisart RC 25 (Porenweite 0,20 µm) filtriert. Als Detektor wird ein Differentialrefraktometer ERC 7510 der Firma ERMA verwendet. Die Kalibrierung erfolgt nach R. Brüssau u.a. in Tenside, Surf.Det. 28 (1991)396-406. Relative Molekulargewichte <700 werden bei der vorgenannten Bestimmungsmethode nicht berücksichtigt.

Wie bereits erwähnt, ist die Herstellung erfindungsgemäß zu verwendender Polymerisate an sich bekannt. Mit Vorteil erfolgt sie durch radikalische Polymerisation. Bevorzugt wird diese in polaren Lösungsmitteln, insbesondere in Wasser, durchgeführt. Als Monomere a können sowohl die freien Säuren als auch deren in der entsprechenden Menge wasserlöslichen Salze eingesetzt werden. Selbstverständlich können auch deren Mischungen eingesetzt werden. Zur Einstellung des gewünschten Molekulargewichts können das Molekulargewicht regelnde Substanzen mitverwendet werden. Geeignete Molekulargewichtsregler sind Verbindungen die eine Thiolgruppe aufweisen (z.B. tert.Dodecyl- oder n-Dodecylmercaptan).

Geeignete Starter sind anorganische Peroxide wie Natriumperoxodisulfat. Die Polymerisation kann je nach Monomerenzusammensetzung als Lösungs- oder Emulsionspolymerisation erfolgen. Das Verhältnis von gewichtsmittlerem Molekulargewicht $\overline{M}_w$ zu zahlenmittlerem Molekulargewicht $\overline{M}_n$ der erfindungsgemäß zu verwendenden wäßrigen Polymerisate I kann 1 bis 30 bzw. 1 bis 20 oder 1 bis 8 betragen. D.h., das Molekulargewicht kann im wesentlichen einheitlich oder über eine gewisse Breite verteilt sein.

Günstig ist es, wenn sich die erfindungsgemäß zu verwendenden Polymerisate I in 100 g Wasser bei 25°C und 1 bar zu wenigstens 1 g lösen. In der Regel wird dies der Fall sein. Häufig beträgt die Löslichkeit der erfindungsgemäß zu verwendenden Polymerisate I in 100 g Wasser unter vorgenannten Bedingungen wenigstens 10 g.

Erfolgt die Herstellung des redispergierbaren Polymerisatpulvers nach dem Verfahren der Sprühtrocknung, wird man das erfindungsgemäß zu verwendende Polymerisat in der Regel so wählen, daß seine Glasübergangstemperatur (midpoint temperature, ASTM D 3418-82) oberhalb der Glasübergangstemperatur des Polymerisats II der sprühzutrocknenden wäßrigen Polymerisatdispersion liegt.

Besonders zweckmäßig ist es, die Sprühtrocknung eine wäßrigen Polymerisatdispersion bei einer Eingangstemperatur $T_E$ des Warmluftstroms von 100 bis 200°C, vorzugsweise 120 bis 160°C, und einer Ausgangstemperatur $T_A$ des Warmluftstroms von 30 bis 90°C, vorzugsweise 50 bis 70°C, durchzuführen. Das Versprühen der

wäßrigen Polymerisatdispersion im Warmluftstrom kann z.B. mittels Ein- oder Mehrstoffdüsen oder über eine rotierende Scheibe erfolgen. Die Abscheidung der Polymerisatpulver erfolgt normalerweise unter Verwendung von Zyklonen oder Filterabscheidern. Die versprühte wäßrige Polymerisatdispersion und der Warmluftstrom werden vorzugsweise parallel geführt.

Vor diesem Hintergrund sind als Sprühhilfsmittel solche Polymerisate I bevorzugt, deren Glasübergangstemperatur die Bedingung >$T_A$ erfüllt. Die Glasübergangstemperaturen von Homopolymerisaten der Monomeren a liegen für nicht zu niedrige Molekulargewichte nach eigenen Untersuchungen oberhalb von 100°C.

Das erfindungsgemäß zu verwendende Polymerisat I kann der zu trocknenden wäßrigen Dispersion des Polymerisats II als wäßrige Lösung oder als wäßrige Dispersion unmittelbar zugesetzt werden. Im Fall einer zu verwendenden wäßrigen Lösung des Polymerisats I rührt man vorzugsweise die wäßrige Dispersion das Polymerisats II in die wäßrige Lösung der Polymerisats I ein.

Es überrascht, daß ein Zusatz von Polymerisaten I in Mengen von 1 oder 2 bis 5 Gew.-%, bezogen auf die Menge an in der zu trocknenden Dispersion enthaltenem Polymerisat II, bereits gute Redispergierbarkeit des durch Trocknung resultierenden Polymerisatpulvers bedingt.

Selbstverständlich kann man, in gleicher Weise bezogen, die erfindungsgemäß zu verwendenden Polymerisate I auch in Mengen von 1 bis 10 Gew.-% oder 5 bis 40 Gew.-% und mehr, bzw. in Mengen von 10 bis 20 Gew.-% anwenden.

Als besonders günstig erweist sich die erfindungsgemäße Verwendung von Polymerisaten I im Fall von Polymerisaten II, deren Glasübergangstemperatur ≤ 50°C oder ≤ 25°C oder ≤ 0°C beträgt. In der Regel wird die Glasübergangstemperatur der Polymerisate II ≥ - 60°C, oder ≥ - 40°C oder ≥ - 20°C betragen. Ferner erweist sich die erfindungsgemäße Verwendung von Polymerisaten I im Fall von solchen Polymerisaten II als besonders günstig, die in polymerisierter Form aus

A) 80 bis 100 Gew.-% wenigstens eines Monomeren aus der Gruppe umfassend Styrol, α-Methylstyrol, Vinyltoluole, Ester aus 3 bis 6 C-Atome aufweisenden α,β-monoethylenisch ungesättigten Carbonsäuren und 1 bis 12 C-Atome aufweisenden Alkanolen, Butadien sowie Vinyl- und Allylester von 1 bis 12 C-Atome aufweisenden Carbonsäuren und

B) 0 bis 20 Gew.-% sonstigen, wenigstens eine ethylenisch ungesättigte Gruppe aufweisenden Monomeren

aufgebaut sind (solche Polymerisate II seien nachfolgend als Polymerisate II* bezeichnet). D.h., mögliche Monomere A sind n-Butylacrylat, 2-Ethylhexylacrylat, Methylmethacrylat und Styrol.

Mögliche Monomere B sind Acrylamid, Methacrylamid, Acrylsäure, Methacrylsäure, Acrylnitril, Methacrylnitril, 2-Acrylamido-2-methylpropansulfonsäure, Vinylpyrrolidon, Hydroxyethylacrylat, Hydroxymethylacrylat, Hydroxypropylacrylat, Hydroxypropylmethacrylat, quaternisiertes Vinylimidazol, N,N-Dialkylaminoalkyl(meth)acrylate, N,N-Dialkylaminoalkyl(meth)acrylamide, Trialkylammoniumalkyl(meth)acrylate und Trialkylammoniumalkyl (meth)acrylamide.

Selbstredend kann es sich bei der zu trocknenden Polymerisatdispersion um eine Sekundärdispersion eines Polymerisats II handeln. In diesem Fall wird das Polymerisat II z.B. in an sich bekannter Weise nach der Methode der radikalischen Lösungspolymerisation hergestellt und nachträglich in eine wäßrige Polymerisatdispersion überführt. In diesem Fall wird das Polymerisat I vorzugsweise der fertigen, das Polymerisat II dispergiert enthaltenden, wäßrigen Polymerisatdispersion zugesetzt.

Handelt es sich bei der das Polymerisat II umfassenden wäßrigen Polymerisatdispersion um eine Primärdispersion, d.h. um eine solche Polymerisatdispersion, die nach der Methode der radikalischen wäßrigen Emulsionspolymerisation unmittelbar in disperser Verteilung befindlich hergestellt wird, kann das erfindungsgemäß zu verwendende Polymerisat I als Trocknungshilfsmittel sowohl vor, während und/oder nach der Emulsionspolymerisation der das Polymerisat II konstituierenden Monomeren zugesetzt werden.

D.h., in der Regel wird man das Polymerisat I einer wäßrigen Dispersion eines Polymerisats II zusetzen, die bereits Dispergiermittel (üblicherweise in Mengen von bis zu 3 Gew.-% bezogen auf die Menge des Polymerisats II) enthält. Als solche kommen sowohl die üblicherweise eingesetzten Schutzkolloide als auch Emulgatoren in Betracht wie sie z.B. in der DE-A 4 21 39 65 benannt sind. Die stabilisierende Wirkung von Schutzkolloiden ist in erster Linie auf eine sterische und/oder elektrostatische Abschirmung der dispergierten Polymerisatpartikel zurückzuführen. Es handelt sich in der Regel um solche Substanzen, deren Molekulargewicht oberhalb von 1500 liegt. Sie können an die dispergierte Polymerisatpartikel sowohl chemisch als auch nur physikalisch gebunden sein. Die stabilisierende Wirkung von Emulgatoren, deren relatives Molekulargewicht regelmäßig < 1000 beträgt, ist darauf zurückzuführen, daß sie infolge ihres amphiphilen Aufbaus (polarer Teil und unpolarer Teil) die Grenzflächenspannung der Grenzfläche Polymerisat/wäßriges Dispergiermedium zu reduzieren vermögen. Im Unterschied zu Schutzkolloiden vermögen Emulgatoren in Wasser Micellen auszubilden. Sie sind ferner so beschaffen, daß sie bei Zusatz zu Wasser bei 25°C und 1 atm beim Erreichen der kritischen Micellbildungskonzentration dessen Oberflächenspannung um wenigstens 25 %

reduzieren.

Erfindungsgemäß von ganz wesentlicher Bedeutung ist, daß insbesondere erfindungsgemäß zu verwendende Polymerisate I (insbesondere wenn sie keine Monomeren b einpolymerisiert enthalten), deren gewichtsmittleres relatives Molekulargewicht 5000 bis 35 000, bevorzugt 7500 bis 20 000 bzw. 15 000 beträgt, nicht nur erfindungsgemäß verwendbare Trocknungshilfsmittel bilden, sondern gleichzeitig in hervorragender Weise die disperse Verteilung wäßriger Polymerisatdispersionen zu stabilisieren vermögen. D.h., setzt man solche erfindungsgemäß zu verwendenden Polymerisate I bereits im Verlauf der radikalischen wäßrige Emulsionspolymerisation zu, besteht einerseits die Möglichkeit, wäßrige Polymerisatdispersionen von Polymerisaten II zu erzeugen, deren Emulgatorgehalt, bezogen auf die Menge an dispergiertem Polymerisat II, ≤ 2, oder ≤ 1 oder ≤ 0,5 oder ≤ 0,1 oder 0 Gew.-% beträgt (die Mitverwendung von Emulgatoren ist häufig unerwünscht, da sie die Verfilmungen der wäßrigen Polymerisatdispersion in der Regel gegenüber Wassereinwirkung empfindlich machen bzw. aufgrund ihrer Niedermolekularität in der Regel aus der Verfilmung ausschwitzen), und die andererseits gleichzeitig in hervorragender Weise zu redispergierbaren Polymerisatpulvern trockenbar sind. Dabei ist es nicht notwendig, daß die wäßrige Dispersion des Polymerisat II neben Polymerisaten I noch Schutzkolloide anderer Art im Rahmen ihrer Herstellung zugesetzt enthält. Vielmehr kann auch der Gehalt an von Polymerisaten I verschiedenen Schutzkolloiden, bezogen auf die Menge des enthaltenen Polymerisats II, ≤ 5 Gew.-% oder ≤ 3 Gew.-% oder 0 Gew.-% betragen.

Besonders bemerkenswert ist, daß die wie vorstehend beschrieben erfolgende Verwendung von solchen niedermolekularen Polymerisaten I auch die Erzeugung stabiler feinteiliger (gewichtsmittlerer Polymerisatteilchendurchmesser ≤ 500 nm, häufig ≤ 200 nm und ≥ 50 nm) wäßriger Polymerisatdispersionen von Polymerisaten II ermöglicht. Beachtenswert ist, daß diesbezüglich eine Verwendung von ≥ 1 Gew.-% bis ≤ 10 Gew.-% an niedermolekularen Polymerisaten I, bezogen auf zu dispergierendes Polymerisat II, ausreicht, insbesondere dann, wenn es sich um niedermolekulare Poly-2-Acrylamido-2-methylpropansulfonsäure als Polymerisat I handelt (selbstverständlich können aber auch in entsprechender Weise bezogene Anwendungsmengen von bis zu 25 bzw. bis zu 50 Gew.-% eingesetzt werden). Dieser Sachverhalt überrascht selbst angesichts der im Stand der Technik zu findenden Empfehlung, niedermolekulare Polymerisate I als Dispergiermittel für feinteilige anorganische Materialien einzusetzen. Wie in den Ausführungsbeispielen gezeigt wird, kann normalerweise von einer Dispergierwirkung bei feinteiligen anorganischen Materialien nicht auf eine solche Wirkung im Rahmen der Herstellung wäßriger Polymerisatdispersionen nach der Methode der radikalischen wäßrigen Emulsionspolymerisation geschlossen werden.

Die Monomerenzusammensetzung des Polymerisats II ist bezüglich der vorgenannten Zusammenhänge im wesentlichen unbeachtlich. Desgleichen gilt für die Art gegebenenfalls mitverwendeter Emulgatoren und Schutzkolloide sowie für die Art des eingesetzten Polymerisationsinitiators. D.h., die vorgenannten Zusammenhänge treffen z.B. auch im Fall von solchen Polymerisaten II zu, die weniger als 70 Gew.-% Styrol einpolymerisiert enthalten.

M.a.W. kommen als wenigstens eine ethylenisch ungesättigte Gruppe aufweisende Monomere zum Aufbau des Polymerisats II im vorgenannten Zusammenhang unter anderen in Betracht monoethylenisch ungesättigte Monomere wie Olefine, z.B. Ethylen, vinylaromatische Monomere wie Styrol, α-Methylstyrol, o-Chlorstyrol oder Vinyltoluole, Vinyl- und Vinylidenhalogenide wie Vinyl- und Vinylidenchlorid, Ester aus Vinylalkohol und 1 bis 18 C-Atome aufweisenden Monocarbonsäuren wie Vinylacetat, Vinylpropionat, Vinyl-n-butyrat, Vinyllaurat und Vinylstearat, Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen wie besonders Acrylsäure- und Methyacrylsäuremethyl-, -ethyl-, -n-butyl-, -iso-butyl- und -2-ethylhexylester, Maleinsäuredimethylester oder Maleinsäure-n-butylester, Nitrile α,β-monoethylenisch ungesättigter Carbonsäuren wie Acrylnitril sowie $C_{4-8}$-konjugierte Diene wie 1,3-Butadien und Isopren in Betracht. Die genannten Monomeren bilden in der Regel die Hauptmonomeren, die, bezogen auf die Gesamtmenge der nach dem Verfahren der radikalischen wäßrigen Emulsionspolymerisation zu polymerisierenden Monomeren, normalerweise einen Anteil von mehr als 50 Gew.-% auf sich vereinen. Monomere, die für sich polymerisiert üblicherweise Homopolymerisate ergeben, die eine erhöhte Wasserlöslichkeit aufweisen, werden im Normalfall lediglich als modifizierende Monomere in Mengen, bezogen auf die Gesamtmenge der zu polymerisierenden Monomeren, von weniger als 50 Gew.-%, in der Regel 0,5 bis 20, vorzugsweise 1 bis 10 Gew.-%, miteinpolymerisiert.

Beispiele für derartige Monomere sind 3 bis 6 C-Atome aufweisende α,β-monoethylenisch ungesättigte Mono- und Dicarbonsäuren und deren Amide wie z.B. Acrylsäure, Methacrylsäure, Maleinsäure, Fumarsäure, Itaconsäure, Acrylamid und Methacrylamid, ferner Vinylsulfonsäure und deren wasserlösliche Salze sowie N-Vinylpyrrolidon. Monomere, die üblicherweise die innere Festigkeit der Verfilmungen der wäßrigen Polymerisatdispersion erhöhen, werden in der Regel ebenfalls nur in untergeordneten Mengen, meist 0,5 bis 10 Gew.-% bezogen auf die Gesamtmenge der zu polymerisierenden Monomeren, miteinpolymerisiert. Normalerweise weisen derartige Monomere eine Epoxy-, Hydroxy-, N-Methylol-, Carbonyl-Gruppe oder wenigstens zwei nicht konjugierte ethylenisch ungesättigte Doppelbindungen auf. Beispiele hierfür sind N-Alkylolamide von 3 bis 10 C-Atome aufweisenden α,β-monoethylenisch ungesättigten Carbonsäuren sowie deren Ester mit 1 bis 4 C-Atome aufweisenden Alkoholen, unter denen das N-Methylolacrylamid

und das N-Methylolmethacrylamid ganz besonders bevorzugt sind, zwei Vinylreste aufweisende Monomere, zwei Vinylidenreste aufweisende Monomere sowie zwei Alkenylreste aufweisende Monomere. Besonders geeignet sind dabei die Di-Ester zweiwertiger Alkohole mit α,β-monoethylenisch ungesättigten Monocarbonsäuren unter denen wiederum die Acryl- und Methacrylsäure vorzugsweise eingesetzt werden. Beispiele für derartige zwei nicht konjugierte ethylenisch ungesättigte Doppelbindungen aufweisende Monomere sind Alkylenglycoldiacrylate und -dimethacrylate wie Ethylenglycoldiacrylat, 1,3-Butylenglycoldiacrylat, 1,4-Butylenglycoldiacrylat sowie Propylenglycoldiacrylat, Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat oder Triallylcyanurat. In diesem Zusammenhang von besonderer Bedeutung sind auch die Methacrylsäure- und Acrylsäure-$C_1$-$C_8$-Hydroxyalkylester wie n-Hydroxyethyl-, n-Hydroxypropyl- oder n-Hydroxybutylacrylat und -methacrylat sowie Verbindungen wie Diacetonacrylamid und Acetylacetoxyethylacrylat bzw. -methacrylat. Neben ungesättigte Doppelbindungen aufweisenden Monomeren können in untergeordneten Mengen, üblicherweise 0,01 bis 2 Gew.-% bezogen auf die zu polymerisierenden Monomeren, das Molekulargewicht regelnde Substanzen wie tert.-Dodecylmercaptan sowie 3-Mercaptopropyltrimethoxysilan miteinpolymerisiert werden. Vorzugsweise werden derartige Substanzen im Gemisch mit den zu polymerisierenden Monomeren der Polymerisationszone zugegeben.

Vor allem trifft die besondere Eignung der niedermolekularen Polymerisate I als im wesentlichen alleinige Dispergiermittel im Rahmen der radikalischen wäßrigen Emulsionspolymerisationsherstellung von Polymerisaten II im Fall der Polymerisate II* zu.

D.h., die erfindungsgemäße Verwendung von Polymerisaten I ermöglicht insbesondere sowohl die Herstellung emulgatorfreier wäßriger Polymerisatdispersionen, als auch die Herstellung von in Wasser redispergierbaren emulgatorfreien Polymerisatpulvern. Bemerkenswert ist dabei, daß solche im wesentlichen emulgatorfreien wäßrigen Polymerisatdispersionen durch eine reduzierte Viskosität gekennzeichnet sind.

Bei der Durchführung der radikalischen wäßrigen Emulsionspolymerisation zur Herstellung wäßriger Dispersionen von Polymerisaten II, deren disperse Verteilung im wesentlichen mittels Polymerisaten I stabilisiert wird, wird vorzugsweise die Methode des Monomerenzulaufs verwendet. Dabei kann die Gesamtmenge des als Schutzkolloid zu verwendenden Polymerisats I sowohl ins Polymerisationsgefäß vorgelegt, als auch gemeinsam mit den zu polymerisierenden Monomeren dem Polymerisationsgefäß kontinuierlich zugeführt werden.

Es sei darauf hingewiesen, daß im Rahmen der erfindungsgemäßen Verwendung neben den erfindungsgemäß zu verwendenden Polymerisaten I zusätzlich an sich bekannte Trocknungshilfsmittel (z.B. Polyvinylalkohol, Polyvinylpyrrolidon, Naphthalinsulfonsäure (oder Phenolsulfonsäure)-Formaldehyd-Kondensate etc.) mitverwendet werden können. Desgleichen gilt für Antibackmittel wie hochdisperse Kieselsäure, die häufig im Rahmen der Sprühtrocknung mitverwendet werden, um ein Zusammenbacken des Polymerisatpulvers bei der Lagerung zu verhindern.

Die bei erfindungsgemäßer Verwendung resultierenden Polymerisatpulver eignen sich als Bindemittel in hydraulisch abbindenden Massen, Anstrichstoffen, Lacken, Klebstoffen, Beschichtungsmassen (insbesondere für Papier) und Kunstharzputzen, wie sie in der EP-A 629650 beschrieben sind. Desgleichen trifft auf die zur Pulverherstellung eingesetzten Ausgangsdispersionen zu. Deren Feststoffvolumengehalt kann 10 bis 75, häufig 20 bis 65, meist 30 bis 50 Vol.-%, bezogen auf das Volumen der Polymerisatdispersion betragen.

Abschließend sei festgehalten, daß beim Zusammengeben einer wäßrigen Lösung bzw. Dispersion eines Polymerisats I und einer wäßrigen Dispersion eines Polymerisats II auf deren Verträglichkeit geachtet werden muß. D.h., im Fall einer kationisch stabilisierten wäßrigen Dispersion eines Polymerisats II sollte kein anionisches Polymerisat-I-System zugesetzt werden.

Beispiele

a) Herstellung eines erfindungsgemäß zu verwendenden Polymerisats I (EPI1)

Die Polymerisation wurde unter Inertgasatmosphäre durchgeführt. In einem Polymerisationsgefäß wurden zunächst 820 g Wasser vorgelegt und auf 85°C erwärmt. Unter Aufrechterhaltung dieser Temperatur wurden 10 Gew.-% einer Lösung von 17,6 g Natriumperoxodisulfat in 150 g Wasser zugegeben und 5 min. gerührt. Danach wurden unter Aufrechterhaltung der 85°C die Restmenge der Natriumperoxodisulfatlösung sowie davon räumlich getrennt eine Mischung aus 800 g Wasser, 400 g 2-Acrylamido-2-methylpropansulfonsäure, 400 g einer 25 gew.-%igen wäßrigen Natriumhydroxidlösung und 0,04 g 4-Methoxyphenol (Polymerisationsverzögerer) unter Rühren (beide Zuläufe zeitgleich beginnend) innerhalb einer Stunde dem Polymerisationsgefäß kontinuierlich zugeführt. Danach wurde das Reaktionsgemisch noch eine Stunde bei 85°C gerührt. Dann wurde auf 60°C abgekühlt und unter Rühren eine Lösung aus 7,5 g Natriumhydroxymethylsulfinat und 30 g Wasser innerhalb einer Stunde zugegeben (zur Beseitigung von verbliebenem Peroxid).

Die resultierende klare Lösung wies einen Feststoffgehalt von 19,7 Gew.-% und einen pH-Wert von 12,8 auf.

Das gewichtsmittlere relative Molekulargewicht des gelösten Polymerisats EPI1 wurde zu 10000 bestimmt.

b) Herstellung eines in der EP-A 629650 (Beispiel 1, DPIa) als Sprühhilfsmittel empfohlenen Vergleichspolymerisats I (VPI)

Die Polymerisation wurde unter Inertgasatmosphäre durchgeführt. In einem Polymerisationsgefäß wurde eine Lösung von 1,76 g Natriumperoxodisulfat in 1050 g Wasser vorgelegt und auf die Polymerisationstemperatur von 85°C erwärmt. Anschließend wurden, unter Aufrechterhaltung der Polymerisationstemperatur, dem Polymerisationsgefäß, zeitgleich beginnend, innerhalb von 2 h Zuläufe I bis III synchron zugeführt. Anschließend wurde das Reaktionsgemisch 1 h bei 85°C sich selbst überlassen. Danach wurden 3 g einer 20 gew.-%igen wäßrigen Lösung des Natriummetallsalzes der Hydroxymethansulfinsäure zugegeben und auf Raumtemperatur abgekühlt.

| | |
|---|---|
| Zulauf I: | 280 g Methylmethacrylat und<br>1 g Ester aus Thioglykolsäure und 2-Ethylhexanol; |
| Zulauf II: | 120 g 2-Acrylamido-2-methylpropansulfonsäure<br>400 g Wasser und<br>150 g 20 gew.-%ige wäßrige Natriumhydroxidlösung; |
| Zulauf III: | 15,84 g Natriumperoxodisulfat und<br>150 g Wasser. |

Der Feststoffgehalt der resultierenden wäßrigen Polymerisatdispersion betrug 20 Gew.-%.

c) Herstellung von sprühzutrocknenden wäßrigen Standarddispersionen von Polymerisaten II (SDII1 bis SDII4)

SDII1: Entspricht Beispiel 2, DPIIa der EP-A 629650

In einem Polymerisationsgefäß wurde eine Lösung aus

| | |
|---|---|
| 294 g | Wasser |
| 7,7 g | einer 10 gew.-%igen wäßrigen Ameisensäurelösung |
| 6,6 g | einer 20 gew.-%igen wäßrigen Lösung von Polyacrylamid |
| 3,3 g | Natriumhydrogencarbonat |
| 11 g | einer 20 gew.-%igen wäßrigen Lösung von ethoxyliertem p-Isooctylphenol (EO-Grad: 25) = Emulgatorlösung 1 und |
| 0,9 g | einer 35 gew.-%igen wäßrigen Lösung des Na-Salzes des Schwefelsäurehalbesters von ethoxyliertem p-Isooctylphenol (EO-Grad: 25) = Emulgatorlösung 2 |

vorgelegt und auf die Polymerisationstemperatur von 90°C erwärmt. Anschließend wurden zeitgleich beginnend die Zuläufe I (innerhalb von 2 h) und II (innerhalb von 2,5 h) unter Aufrechterhaltung der Polymerisationstemperatur dem Polymerisationsgefäß kontinuierlich zugeführt. Danach wurde das Polymerisationsgefäß weitere 2 h bei 90°C sich selbst überlassen. Anschließend wurde auf Raumtemperatur abgekühlt und mit 5,5 g einer 20 gew.-%igen wäßrigen Calciumhydroxid-Aufschlämmung neutralisiert. Der Feststoffgehalt der resultierenden wäßrigen Polymerisatdispersion SDII1 betrug 54,7 Gew.-%. Das dispergierte Polymerisat wies eine Glasübergangstemperatur von -1°C auf.

Zulauf I:

| | |
|---|---|
| 682 g | n-Butylacrylat |
| 385 g | Styrol |
| 44 g | einer 50 gew.-%igen wäßrigen Lösung von Acrylamid |
| 73,3 g | einer 15 gew.-%igen wäßrigen Lösung von Methacrylamid |
| 16,5 g | Emulgatorlösung 1 |
| 22,6 g | Emulgatorlösung 2 und |
| 235 g | Wasser. |

Zulauf II:

| | |
|---:|---|
| 6,4 g | Natriumperoxidisulfat in |
| 180 g | Wasser. |

SDII2: Entspricht Beispiel 2, DPIIb der EP-A 629650

In einem Polymerisationsgefäß wurde eine Mischung aus

| | |
|---:|---|
| 500 g | Wasser |
| 2,5 g | Natriumacetat |
| 2,5 g | Butenol und |
| 10 g | einer ethoxylierten Cellulose (Natrosol® 250 GR) |

auf die Polymerisationstemperatur von 80°C erwärmt. Dann wurden auf einmal zunächst 150 g Zulauf I und danach 10 g Zulauf II in das Polymerisationsgefäß eingetragen und 20 min. bei 80°C polymerisiert. Anschließend wurde zeitgleich beginnend die Restmenge von Zulauf I (innerhalb von 3 h) und die Restmenge von Zulauf II (innerhalb von 3,5 h) unter Aufrechterhaltung der 80°C kontinuierlich zudosiert. Danach wurde noch 1 h bei 80°C gerührt und schließlich auf Raumtemperatur abgekühlt.

Der Feststoffgehalt der resultierenden wäßrigen Polymerisatdispersion SDII2 betrug 50,2 Gew.-%. Das dispergierte Polymerisat wies eine Glasübergangstemperatur von -2°C auf.

Zulauf I:

| | |
|---:|---|
| 600 g | Vinylpropionat |
| 200 g | tert.-Butylacrylat |
| 200 g | n-Butylacrylat |
| 160 g | eines Gemisches aus 150 g Emulgatorlösung 1 und 10 g eines Blockcopolymeren aus Ethylenoxid und propylenoxid (molares Verhältnis EO:PO = 0,7 und das relative zahlenmittlere Molekulargewicht = 3200) und |
| 343 g | Wasser; |

Zulauf II:

| | |
|---:|---|
| 5 g | Natriumperoxidisulfat in |
| 100 g | Wasser. |

SDII3: Entspricht Beispiel 3, DPIIc der EP-A 629650

In einem Polymerisationsgefäß wurde eine Lösung aus

| | |
|---:|---|
| 6000 g | Wasser und |
| 17 g | einer 45 gew.-%igen wäßrigen Lösung der Dowfax® 2A1 entsprechenden grenzflächenaktiven Substanz |

auf die Polymerisationstemperatur von 80°C erwärmt. Anschließend wurden nacheinander auf einmal 1087 g Zulauf I und 108 g Zulauf II ins Polymerisationsgefäß gegeben und 30 min. bei 80°C polymerisiert. Anschließend wurden unter Aufrechterhaltung der Polymerisationstemperatur die Restmengen der Zuläufe I und II zeitgleich beginnend während 3,5 h kontinuierlich zugeführt. Anschließend wurde das Reaktionsgemisch 4 h bei 80°C sich selbst überlassen. Abschließend wurde auf Raumtemperatur abgekühlt und mit 420 g einer 25 gew.-%igen wäßrigen Natriumhydroxidlösung neutralisiert. Der Festgehalt der resultierenden wäßrigen Polymerisatdispersion SDII3 betrug 50,9 Gew.-%. Das dispergierte Polymerisat wies eine Glasübergangstemperatur von 60°C auf.

Zulauf I:

| | |
|---|---|
| 12150 g | Styrol |
| 2250 g | Butadien |
| 450 g | einer 50 %igen wäßrigen Lösung von Acrylamid |
| 375 g | Acrylsäure |
| 120 g | ter.-Dodecylmercaptan |
| 117 g | einer 45 gew.-%igen wäßrigen Lösung der Dowfax 2A1 entsprechenden grenzflächenaktiven Substanz |
| 250 g | einer 15 gew.-%igen wäßrigen Lösung des Natriumsalzes des Schwefelsäurehalbesters von Laurylalkohol und |
| 6033 g | Wasser. |

Zulauf II:

| | |
|---|---|
| 150 g | Natriumperoxidisulfat und |
| 200 g | Wasser. |

SDII4:

Wie SDII1, jedoch wurden die 385 g Styrol durch 385 g Methylmethacrylat ersetzt. Nach Filtration wurde eine Dispersion SDII4 mit einem Feststoffgehalt von 55,6 Gew.-% erhalten. Das dispergierte Polymerisat wies eine Glasübergangstemperatur von 0°C auf.

d) Sprühtrocknung der wäßrigen Polymerisatdispersionen aus c) und Beurteilung der Redispergierbarkeit der resultierenden Pulver

Zunächst wurde die jeweilige wäßrige Polymerisatdispersion SDII1 bis SDII4 auf einen Feststoffgehalt von 36,2 Gew.-% verdünnt. Dann wurde in die wäßrige Lösung des EPI1 aus a) bzw. in die wäßrige Dispersion des VPI aus a) unter kräftigem Rühren soviel der jeweiligen auf 36,2 Gew.-% verdünnten Polymerisatdispersion SDII1 bis SDII4 rasch eingerührt, daß ein wäßriges Gemisch resultierte, das einen Feststoffgehalt von 35 Gew.-% (bezogen auf das jeweilige dispergierte Polymerisat II waren somit stets 4,5 Gew.-% an EPI1 bzw. VPI enthalten) aufwies.

Die Sprühtrocknung der wäßrigen Gemische erfolgte in einem Minor-Labortrockner der Fa. GEA Wiegand GmbH (Geschäftsbereich Niro), DE, mit Zweistoffdüsenzerstäubung bei einer Turm-Eingangstemperatur von 130°C und einer -Ausgangstemperatur von 60°C (Leistung: ca. 2 kg Sprühspeise/h). Als Anti-Blockmittel wurden gleichzeitig mit der Sprühspeise ca. 2,5 Gew.-% (bezogen auf feste Polymerisat-Mischung) einer feinteiligen Kieselsäure (mittlerer Korngrößtdurchmesser: 10 µm) in die Trocknungskammer zudosiert. Die Beurteilung der jeweiligen Sprühtrocknung weist die Tabelle 1 aus.

Zur Überprüfung der Redispergierbarkeit der erhaltenen Polymerisatpulver wurde wie folgt vorgegangen:

In eine Glasflasche wurden 90 g Wasser eingewogen und bei 25°C mit 10 g Polymerisatpulver versetzt. Das Gemisch wurde mit einem Ultra-Turrax 1 der Fa. Janke & Kunkel, IKA-Labortechnik, Staufen DE, 1 min. bei 9500 U/min. gerührt und in einen Meßzylinder gefüllt. Anschließend wurde der mit einem Kunststoffstropfen verschlossene Meßzylinder bei 25°C 72 h unbewegt gelagert. Danach wurde die Redispersion gut geschüttelt und über ein 72-µm-Sieb filtriert. Das den Filterkuchen enthaltende Sieb wurde bei 80°C 12 h im Trockenschrank gelagert und anschließend durch Wägung der prozentuale Gewichtsanteil des getrockneten Koagulats, bezogen auf eingesetzte Pulvermenge (10 g), bestimmt. Die Ergebnisse zeigt ebenfalls die Tabelle 1.

Tabelle 1

| Sprühgetrocknetes Gemisch | | Wandbelag | Pulverausbeute | Koagulat |
|---|---|---|---|---|
| Dispersion | Sprühhilfsmittel | | | |
| SDII1 | EPI1 | wenig | 86 % | 0,5 Gew.-% |
| SDII2 | EPI1 | wenig | 74 % | 1,4 Gew.-% |
| SDII3 | EPI1 | wenig | 63 % | 2,2 Gew.-% |
| SDII4 | EPI1 | wenig | 89 % | 0,7 Gew.-% |
| SDII1 | VPI1 | stark | 30 % | 7,1 Gew.-% |

e) Herstellung wäßriger Dispersionen von Polymerisaten II, die als im wesentlichen alleiniges Dispergiermittel ein niedermolekulares erfindungsgemäßes Polymerisat I enthalten, die Sprühtrocknung solcher wäßriger Polymerisatdispersionen und Vergleichsversuche

D1:

200 g n-Butylacrylat, 200 g Methylmethacrylat und 91,4 g der 19,7 gew.-%igen wäßrigen Lösung des Polymerisats EPI1 aus a) wurden in 114 g Wasser zu einem Zulauf 1 emulgiert. 12 g Natriumperoxodisulfat und 159 g Wasser bildeten den Zulauf 2.

Unter Inertgasatmosphäre wurden in einem Polymerisationsgefäß 200 g Wasser sowie 5 Gew.-% des Zulaufs 1 vorgelegt. Die Vorlage wurde unter Rühren auf 90°C erhitzt und mit 10 Gew.-% des Zulaufs 2 versetzt. Anschließend wurde das Reaktionsgemisch 15 min. bei 90°C gehalten. Danach wurden dem Polymerisationsgefäß unter Aufrechterhaltung der 90°C die Restmenge an Zulauf 1 (innerhalb von 2 h) sowie die Restmenge an Zulauf 2 (innerhalb von 2,5 h) kontinuierlich zugeführt. Nach Beendigung der Zuläufe wurde das Reaktionsgemisch noch 2 h bei 90°C gerührt und danach auf Raumtemperatur abgekühlt. Die nach Filtration über ein Sieb mit einer Maschenweite von 250 µm erhaltene wäßrige Polymerisatdispersion wies einen Feststoffgehalt von 43,6 Gew.-%, einen pH-Wert ihres wäßrigen Dispergiermediums von 1,9 sowie einen LD-Wert von 6 % auf (der LD-Wert ist ein Maß für die Polymerisatteilchengröße einer wäßrigen Polymerisatdispersion; er gibt die Lichtdurchlässigkeit bei 25°C im auf einen Feststoffgehalt von 0,01 Gew.-% verdünnten Zustand, relativ zu reinem Wasser und bei einer Schichtdicke von 2,5 cm an, unter Einstrahlung von weißem Licht). Im Filter blieben 0,2 g Koagulat zurück. Ein nasser, in einer Schichtdicke von 60 µm auf eine Glasplatte aufgerakelter Film zeigte im wesentlichen keine Stippen (Mikrokoagulat) auf.

D2:

Wie D1, mit dem Unterschied, daß der Zulauf 1 aus einer Emulsion von 208 g n-Butylacrylat, 180 g Methylmethacrylat, 8 g Acrylamid, 4 g Acrylsäure und 91,4 g der 19,7 gew.-%igen wäßrigen Lösung des Polymerisats EPI1 aus a) in 114 g Wasser bestand. Die nach Filtration über ein Sieb mit einer Maschenweite von 250 µm erhaltene Dispersion wies einen Feststoffgehalt von 43,9 Gew.-%, einen pH-Wert ihres wäßrigen Dispergiermediums von 4,3 sowie einen LD-Wert von 52 % auf. Im Filter bleiben 0,2 g Koagulat zurück. Ein nasser, bei einer Schichtdicke von 60 µm auf eine Glasplatte aufgerakelter Film zeigte im wesentlichen keine Stippen.

D3:

Wie D1, mit dem Unterschied, daß der Zulauf 1 aus einer Emulsion von 248 g n-Butylacrylat, 140 g Styrol, 8 g Acrylamid, 4 g Methacrylamid und 91,4 g der 19,7 gew.-%igen wäßrigen Lösung des Polymerisats EPI1 aus a) in 114 g Wasser bestand. Die nach Filtraten über ein Sieb mit einer Maschenweite von 250 µm erhaltene Dispersion wies einen Feststoffgehalt von 43,3 Gew.-%, einen pH-Wert ihres wäßrigen Dispergiermediums von 2,1 sowie einen LD-Wert von 49 % auf. Im Filter bleiben 0,3 g Koagulat zurück. Ein nasser, in einer Schichtdicke von 60 µm auf eine Glasplatte aufgerakelter Film zeigte im wesentlichen keine Stippen.

D4:

Aus einem Gemisch aus 100 g n-Butylacrylat und 100 g Methylmethacrylat wurde ein Zulauf 1 gebildet. Eine Lösung von 1,0 g Wasserstoffperoxid und 100 g Wasser bildete einen Zulauf 2. Unter Inertgasatmosphäre wurden in ein Polymerisationsgefäß 247 g Wasser, 1,3 g einer 15 gew.-%igen wäßrigen Natriumlaurylsulfat-Lösung, 50,8 g einer 19,7 gew.-%igen wäßrigen Lösung des Polymerisats EPI1 aus a), 0,04 g $CuSO_4 \cdot 5H_2O$

sowie 5 Gew.-% des Zulaufs 1 vorgelegt. Unter Rühren wurde die Vorlage auf 85°C erhitzt und mit 10 Gew.-% des Zulauf 2 versetzt. Danach wurde das Gemisch 15 min bei 85°C unter Rühren gehalten und anschließend unter Aufrechterhaltung der 85°C die Restmengen von Zulauf 1 (innerhalb von 2h) und Zulauf 2 (innerhalb von 2,5 h) zeitgleich beginnend kontinuierlich ins Polymerisationsgefäß zugeführt. Nach beendeter Zufuhr wurde das Polymerisationsgemisch noch 2 h bei 85°C nachgerührt und anschließend auf Raumtemperatur abgekühlt. Die nach Filtration über ein Sieb mit einer Maschenweite von 250 µm erhaltene Dispersion wies einen Feststoffgehalt von 34,2 Gew.-%, einen pH-Wert ihres wäßrigen Dispergiermediums von 6,8 sowie einen LD-Wert von 88 % auf. Im Filter blieben 0,69 g Koagulat zurück. Ein nasser, in einer Schichtdicke von 60 µm auf eine Glasplatte aufgerakelter Film zeigte im wesentlichen keine Stippen.

D5:

Aus 155 g n-Butylacrylat, 87,5 g Styrol, 5 g Acrylamid, 2,5 g Methacrylamid, 190,4 g der 19,7 gew.-%igen Lösung des Polymerisats EPI1 aus a) und 20 g Wasser wurde eine Emulsion als Zulauf 1 gebildet. Eine Lösung von 7,5 g Natriumperoxodisulfat in 100 g Wasser bildete einen Zulauf 2. Unter Inert-gasatmosphäre wurden in einem Polymerisationsgefäß 104 g Wasser, sowie 5 Gew.-% des Zulauf 1 vorgelegt. Die Vorlage wurde unter Rühren auf 90°C erhitzt und mit 10 Gew.-% des Zulaufs 2 versetzt. Anschließend wurde das Gemisch 15 min. unter Rühren bei 90°C gehalten. Anschließend wurden unter Aufrechterhaltung der 90°C, zeitgleich beginnend, die Restmengen von Zulauf 1 (innerhalb von 2,0 h) sowie von Zulauf 2 (innerhalb von 2,5 h) dem Polymerisationsgefäß kontinuierlich zugeführt. Danach wurde das Reaktionsgemisch noch 2 h bei 90°C gerührt und schließlich auf Raumtemperatur abgekühlt.

Die nach Filtration über ein Sieb mit einer Maschenweit von 250 µm erhaltene Dispersion wies einen Feststoffgehalt von 43,2 Gew.-%, einen pH-Wert ihres wäßrigen Dispergiermediums von 2,7 sowie einen LD-Wert von 68 % auf. Im Filter blieben 0,3 g Koagulat zurück. Ein nasser, in einer Schichtdicke von 60 µm auf eine Glasplatte aufgrakelter Film zeigte im wesentlichen keine Stippen.

VD1:

Wie D1, Zulauf 1 bestand jedoch aus einer Emulsion von 200 g n-Butylacrylat, 200 g Methylmethacrylat und 90 g der 20 gew.-%igen wäßrigen Dispersion des Polymerisats VPI aus b) in 114 g Wasser. Die nach Filtration über ein Sieb mit einer Maschenweite von 250 µm erhaltene Dispersion wies einen Feststoffgehalt von 43,4 Gew.-%, einen pH-Wert ihres wäßrigen Dispergiermediums von 1,7 sowie einen LD-Wert von 30 % auf. Im Filter blieben 5,8 g Koagulat zurück. Ein nasser, in einer Schichtdicke von 60 µm auf eine Glasplatte aufgerakelter Film wies zahlreiche Stippen auf.

VD2:

Wie D5, anstelle der 190,4 g der 19,7 gew.-%igen wäßrigen Lösung des Polymerisats EPI1 aus a) wurden jedoch 187,5 g der 20 gew.-%igen wäßrigen Dispersion des Polymerisats VPI aus b) eingesetzt. Die nach Filtration über ein Sieb mit einer Maschenweite von 250 µm erhaltene Dispersion wies einen Feststoffgehalt von 42,7 Gew.-%, einen pH-Wert ihres wäßrigen Dispergiermediums von 2,1 sowie einen LD-Wert von 43 % auf. Im Filter blieben 14 g Koagulat zurück. Ein nasser, in einer Schichtdicke von 60 µm auf eine Glasplatte aufgerakelter Film wies zahlreiche Stippen auf.

VD3:

Wie D4, die Vorlage enthielt jedoch ein Gemisch aus 247 g Wasser, 1,3 g einer 15 gew.-%igen wäßrigen Natriumlaurylsulfatlösung, 50 g einer in Analogie zu a) hergestellten 20 gew.-%igen wäßrigen Lösung einer Poly-2-Acrylamido-2-methylpropansulfonsäure, deren gewichtsmittleres relatives Molekulargewicht jedoch 38 000 betrug, 0,04 g $CuSO_4 \cdot 5H_2O$ und 5 Gew.-% des Zulauf 1. Das Reaktionsgemisch verdickte bereits während des Monomerenzulaufs, so daß der Reaktionsansatz abgebrochen werden mußte.

VD4:

Wie D1, Zulauf 1 bestand jedoch aus 200 g n-Butylacrylat, 200 g Methylmethacrylat, 90 g der 20 gew.-%igen wäßrigen Poly-2-Acrylamido-2-methyl-propansulfonsäurelösung aus VD3 und 116 g Wasser. Der Ansatz koagulierte nach dem Auspolymerisieren.

VD5:

Wie D1, Zulauf 1 bestand jedoch aus 200 g n-Butylacrylat, 200 g Methylmethacrylat, 71,2 g einer 25,3 gew.-%igen wäßrigen Lösung von Sokalan® CP9 (Maleinsäure-Copolymer), das als Dispergiermittel für feinteilige organische und anorganische Feststoffe im Handel erhältlich ist und 135 g Wasser. Der Ansatz koagulierte nach dem Auspolymerisieren. Dies weist aus, daß Dispergiermittel für feinteilige organische und anorganische Feststoffe nicht notwendigerweise als Schutzkolloid zur Durchführung radikalischer wäßriger Emulsionspolymerisationen geeignet sind. Die wäßrigen Polymerisatdispersionen D1 bis D5 waren in befriedigender Weise nach dem unter d) beschriebenen Sprühtrocknungsverfahren zu redispergierbaren Polymerisatpulvern trokkenbar.

f) Herstellung weiterer erfindungsgemäß zu verwendender Polymerisate I (EPI2 bis EPI6) sowie wäßriger Dispersionen D6 bis D10 von Polymerisaten II, die als im wesentlichen alleiniges Dispergiermittel ein niedermolekulares erfindungsgemäßes Polymerisat I enthalten und die Sprühtrocknung solcher wäßriger Polymerisatdispersionen.

1. Herstellung von EPI2 bis EPI6

Die Polymerisationen wurden unter Inertgas durchgeführt. In einem Polymerisationsgefäß wurden zunächst 810 g Wasser vorgelegt und auf 85°C erwärmt. Unter Aufrechterhaltung dieser Temperatur wurden 10 Gew.-% einer Lösung von Xg Natriumperoxodisulfat in Yg Wasser zugegeben und 5 min gerührt. Danach wurden unter Aufrechterhaltung der 85°C die Restmenge der Natriumperoxodisulfatlösung sowie, davon räumlich getrennt, eine Mischung aus 800 g Wasser, 400 g 2-Acrylamido-2-methylpropansulfonsäure, 400 g einer 25 gew.-%igen wäßrigen Natriumhydroxidlösung und 0,04 g 4-Methoxyphenol unter Rühren (beide Zuläufe zeitgleich beginnend) innerhalb von zwei Stunden dem Polymerisationsgefäß kontinuierlich zugeführt. Danach wurde das Reaktionsgemisch noch eine Stunde bei 85°C gerührt und anschließend abgekühlt. Die angewandten Werte für X und Y, die Feststoffgehalte der resultierenden wäßrigen Lösungen, die pH-Werte der zugehörigen wäßrigen Dispergiermedien und das gewichtsmittlere relative Molekulargewicht $M_w$ der in Lösung befindlichen Polymerisate EPI2 bis EPI6 zeigt die nachfolgende Tabelle 1.

Tabelle 1

| | X | Y | Feststoffgehalt (Gew.-%) | pH-Wert | $M_w$ |
|---|---|---|---|---|---|
| EPI2 | 2,4 | 100 | 19,3 | 13,5 | 12300 |
| EPI3 | 5 | 110 | 19,2 | 13,4 | 11400 |
| EPI4 | 10 | 130 | 19,4 | 13,4 | 10000 |
| EPI5 | 20 | 170 | 19,5 | 13,2 | 9600 |
| EPI6 | 40 | 250 | 19,3 | 12,9 | 8500 |

2. Herstellung wäßriger Dispersionen D6 bis D10 von Polymerisaten II und deren Sprühtrocknung

208 g n-Butylacrylat, 180 g Methylmethacrylat, 8 g Acrylamid, 4 g Acrylamid und 18,0 g eines der Polymerisate EPI2 bis EPI6 wurden in 187 g Wasser zu einem Zulauf 1 emulgiert und die resultierende Emulsion mittels 2N wäßriger $NH_3$-Lösung auf einen pH-Wert von 8,0 eingestellt. Die Lösung von 12,0 g Natriumperoxodisulfat in 159 g Wasser bildete den Zulauf 2.

Unter Intertgasatmosphäre wurden in einem Polymerisationsgefäß 200 g Wasser sowie 5 Gew.-% des Zulaufs 1 vorgelegt. Die Vorlage wurde unter Rühren auf 90°C erhitzt und mit 10 Gew.-% des Zulaufs 2 versetzt. Anschließend wurde das Reaktionsgemisch 15 min bei 90°C gehalten. Danach wurden dem Polymerisationsgefäß unter Aufrechterhaltung der 90°C die Restmenge an Zulauf 1 (innerhalb von 2 h) sowie die Restmenge an Zulauf 2 (innerhalb von 2,5 h) kontinuierlich zugeführt. Nach Beendigung der Zuläufe wurde das Reaktionsgemisch noch 2 h bei 90°C gerührt und danach auf Raumtemperatur abgekühlt. Von den nach Filtration über ein Sieb mit einer Maschenweite von 250 µm erhaltenen wäßrigen Polymerisatdispersionen wurden der Feststoffgehalt, der pH-Wert des wäßrigen Dispergiermediums sowie ihr LD-Wert und der Koagulatgehalt im Filter bestimmt. Zusätzlich wurde von den filtrierten wäßrigen Polymerisatdispersionen ein nasser Film in einer Schichtdicke von 60 µm auf eine Glasplatte aufgerakelt und an selbigem der Anteil an Stippen qualitativ (i.w. = im wesentlichen) beurteilt. Die erhaltenen Ergebnisse weist Tabelle II aus.

Tabelle II

| | Polymerisat I | Feststoffgehalt [Gew.-%] | LD [%] | Koagulat [g] | Steppen | pH |
|---|---|---|---|---|---|---|
| D6 | EPI2 | 43,6 | 52 | 0,2 | i.w. keine | 4,7 |
| D7 | EPI3 | 43,1 | 53 | 0,5 | i.w. keine | 4,6 |
| D8 | EPI4 | 43,2 | 42 | 0,7 | i.w. keine | 4,5 |

Tabelle II (fortgesetzt)

| | Polymerisat I | Feststoffgehalt [Gew.-%] | LD [%] | Koagulat [g] | Steppen | pH |
|---|---|---|---|---|---|---|
| D9 | EPI5 | 43,8 | 34 | 0,6 | i.w. keine | 4,4 |
| D10 | EPI6 | 43,6 | 45 | 0,5 | i.w. keine | 4,4 |

Die wäßrigen Polymerisatdispersionen D6 bis D10 waren in befriedigender Weise nach dem unter d) beschriebenen Sprühtrocknungsverfahren zu redispergierbaren Polymerisatpulvern trockenbar.

**Patentansprüche**

1. Trocknung einer wäßrigen Dispersion eines Polymerisats II, **dadurch gekennzeichnet, daß** die wäßrige Dispersion des Polymerisats II als Trocknungshilfsmittel wenigstens ein Polymerisat I zugesetzt enthält, das in polymerisierter Form
zu > 80 bis 100 Gew.-% aus wenigstens einem Monomeren der allgemeinen Formel I und/oder deren Salzen (Monomere a)

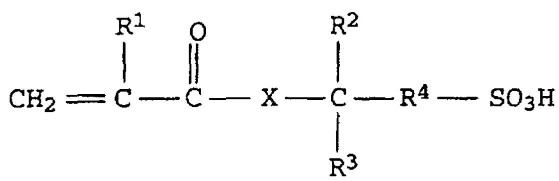

(I),

mit

$R^1$, $R^2$, $R^3$: unabhängig voneinander H oder $C_1$- bis $C_3$-Alkyl,
$R^4$: $C_1$- bis $C_5$-Alkylen und
X: O oder NH,

und
zu 0 bis < 20 Gew.-% aus wenigstens einem radikalisch copolymerisierbaren Monomeren (Monomere b) aufgebaut ist und dessen relatives gewichtsmittlere Molekulargewicht 5000 bis 35000 beträgt.

2. Trocknung nach Anspruch 1, **dadurch gekennzeichnet, daß** das Polymerisat I in polymerisierter Form zu 90 bis 100 Gew.-% aus Monomeren a und zu 0 bis 10 Gew.-% aus Monomeren b aufgebaut ist.

3. Trocknung nach Anspruch 1, **dadurch gekennzeichnet, daß** das Polymerisat I in polymerisierter Form allein aus Monomeren a aufgebaut ist.

4. Trocknung nach einem der Ansprüche 1 bis 3, **dadurch gekennzeichnet, daß** das Polymerisat I 2-Acrylamido-2-methylpropansulfonsäure und/oder deren Salze einpolymerisiert enthält.

5. Trocknung nach Anspruch 3, **dadurch gekennzeichnet, daß** das Polymerisat I in polymerisierter Form allein aus 2-Acrylamido-2-methylpropansulfonsäure und/oder deren Salzen aufgebaut ist.

6. Trocknung nach einem der Ansprüche 1 bis 5, **dadurch gekennzeichnet, daß** die Löslichkeit des Polymerisats I in 100 g Wasser bei 25°C und 1 bar wenigstens 10 g beträgt.

7. Trocknung nach einem der Ansprüche 1 bis 6, **dadurch gekennzeichnet, daß** die wäßrige Dispersion des Polymerisats II, bezogen auf die Masse des Polymerisats II, 1 bis 40 Gew.-% Polymerisat I zugesetzt enthält.

8. Trocknung nach einem der Ansprüche 1 bis 6, **dadurch gekennzeichnet, daß** die wäßrige Dispersion des Polymerisats II, bezogen auf die Masse des Polymerisats II, 1 bis 20 Gew.-% Polymerisat I zugesetzt enthält.

**9.** Trocknung nach einem der Ansprüche 1 bis 6, **dadurch gekennzeichnet, daß** die wäßrige Dispersion des Polymerisats II, bezogen auf die Masse des Polymerisats II, 1 bis 5 Gew.-% Polymerisat I zugesetzt enthält.

**10.** Trocknung nach einem der Ansprüche 1 bis 9, **dadurch gekennzeichnet, daß** die Glasübergangstemperatur des Polymerisats II $\leq 50°C$ beträgt.

**11.** Trocknung nach einem der Ansprüche 1 bis 10, **dadurch gekennzeichnet, daß** das Polymerisat II in polymerisierter Form aus

A) 80 bis 100 Gew.-% wenigstens eines Monomeren aus der Gruppe umfassend Styrol, $\alpha$-Methylstyrol, Vinyltoluole, Ester aus 3 bis 6 C-Atome aufweisenden $\alpha,\beta$-monoethylenisch ungesättigten Carbonsäuren und 1 bis 12 C-Atome aufweisenden Alkanolen, Butadien sowie Vinyl- und Allylester von 1 bis 12 C-Atome aufweisenden Carbonsäuren und

B) 0 bis 20 Gew.-% sonstigen, wenigstens eine ethylenisch ungesättigte Gruppe aufweisenden Monomeren

aufgebaut ist.

**12.** Trocknung nach einem der Ansprüche 1 bis 11, **dadurch gekennzeichnet, daß** die Trocknung nach dem Verfahren der Sprühtrocknung erfolgt.

**13.** Trocknung nach Anspruch 12, **dadurch gekennzeichnet, daß** die Eingangstemperatur des Warmluftstroms 100 bis 200°C und die Ausgangstemperatur des Warmluftstroms 30 bis 90°C beträgt.

**14.** Polymerisatpulver, erhältlich durch Trocknung nach einem der Ansprüche 1 bis 13.

**15.** Verwendung von Polymerisaten I, die in polymerisierter Form
zu > 80 bis 100 Gew.-% aus wenigstens einem Monomeren der allgemeinen Formel I und/oder deren Salzen (Monomere a)

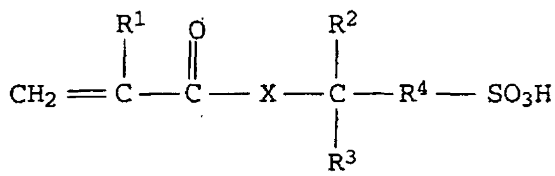 (I),

mit

$R^1$, $R^2$, $R^3$: unabhängig voneinander H oder $C_1$- bis $C_3$-Alkyl,
$R^4$: $C_1$- bis $C_5$-Alkylen und
X: O oder NH,

und
zu 0 bis < 20 Gew.-% aus wenigstens einem radikalisch copolymerisierbaren Monomeren (Monomere b) aufgebaut sind und deren relatives gewichtsmittlere Molekulargewicht 5000 bis 35000 beträgt, als Hilfsmittel bei der Trocknung wäßriger Dispersionen von von den Polymerisaten I verschiedenen Polymerisaten II.

**16.** Verwendung einer wäßrigen Dispersion eines Polymerisats II, die ein von diesem Polymerisat II verschiedenes Polymerisat I zugesetzt enthält, das in polymerisierter Form
zu > 80 bis 100 Gew.-% aus wenigstens einem Monomeren der allgemeinen Formel I und/oder deren Salzen (Monomere a)

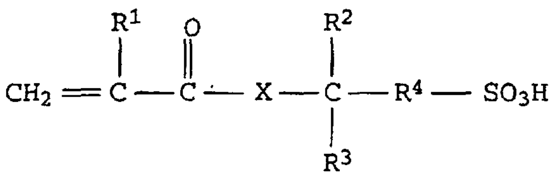

(I),

mit

| | |
|---|---|
| $R^1$, $R^2$, $R^3$: | unabhängig voneinander H oder $C_1$- bis $C_3$-Alkyl, |
| $R^4$: | $C_1$- bis $C_5$-Alkylen und |
| X: | O oder NH, |

und
zu 0 bis < 20 Gew.-% aus wenigstens einem radikalisch copolymerisierbaren Monomeren (Monomere b) aufgebaut ist und dessen relatives gewichtsmittlere Molekulargewicht 5000 bis 35000 beträgt,
zur Herstellung von Polymerisatpulvern.

**17.** Polymerisatpulver, enthaltend wenigstens ein Polymerisat I, das in polymerisierter Form
zu > 80 bis 100 Gew.-% aus wenigstens einem Monomeren der allgemeinen Formel I und/oder deren Salzen (Monomere a)

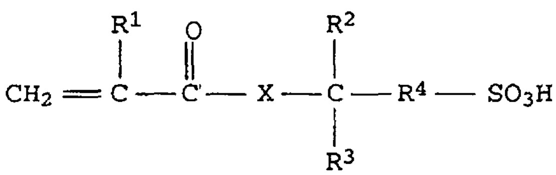

(I),

mit

| | |
|---|---|
| $R^1$, $R^2$, $R^3$: | unabhängig voneinander H oder $C_1$- bis $C_3$-Alkyl, |
| $R^4$: | $C_1$- bis $C_5$-Alkylen und |
| X: | O oder NH, |

und zu 0 bis < 20 Gew.-% aus wenigstens einem radikalisch copolymerisierbaren Monomeren (Monomere b) aufgebaut ist und dessen relatives gewichtsmittlere Molekulargewicht 5000 bis 35000 beträgt, und wenigstens ein vom Polymerisat I verschiedenes Polymerisat II.

**18.** Polymerisatpulver nach Anspruch 17, das, bezogen auf die Menge des enthaltenen Polymerisats II, ≤ 1 Gew.-% an Emulgatoren enthält.

**19.** Mineralisches Bindemittel, enthaltend wenigstens ein Polymerisatpulver nach Anspruch 17 oder 18.

**20.** Verwendung von Polymerisatpulvern nach Anspruch 17 oder 18 in Zubereitungen zum Beschichten oder Kleben.

**21.** Kunstharz-Putz Trockenzubereitung, enthaltend wenigstens ein Polymerisatpulver nach Anspruch 17 oder 18.

**Claims**

**1.** Drying an aqueous dispersion of a polymer II, wherein the aqueous dispersion of the polymer II contains, as an added drying assistant, at least one polymer I which, in polymerized form, is composed of
from > 80 to 100 % by weight of at least one monomer of the formula I or a salt thereof (monomer a)

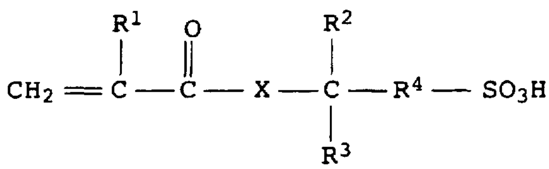 (I),

where

$R^1$, $R^2$ and $R^3$, independently of one another, are each H or $C_1$-$C_3$-alkyl,
$R^4$ is $C_1$-$C_5$-alkylene and
X is O or NH,

and
from 0 to < 20 % by weight of at least one monomer capable of free radical copolymerization (monomers b), and whose relative weight average molecular weight is from 5000 to 35,000.

**2.** Drying as claimed in claim 1, wherein the polymer I in polymerized form is composed of from 90 to 100 % by weight of monomers a and of from 0 to 10 % by weight of monomers b.

**3.** Drying as claimed in claim 1, wherein the polymer I in polymerized form is composed of monomers a alone.

**4.** Drying as claimed in any of claims 1 to 3, wherein the polymer I contains 2-acrylamido-2-methylpropanesulfonic acid or a salt thereof as polymerized units.

**5.** Drying as claimed in claim 3, wherein the polymer I in polymerized form is composed only of 2-acrylamido-2-methylpropanesulfonic acid or a salt thereof.

**6.** Drying as claimed in any of claims 1 to 5, wherein the solubility of the polymer I in 100 g of water at 25°C and 1 bar is at least 10 g.

**7.** Drying as claimed in any of claims 1 to 6, wherein the aqueous dispersion of the polymer II contains from 1 to 40 % by weight, based on the weight of the polymer II, of added polymer I.

**8.** Drying as claimed in any of claims 1 to 6, wherein the aqueous dispersion of the polymer II contains from 1 to 20 % by weight, based on the weight of the polymer II, of added polymer I.

**9.** Drying as claimed in any of claims 1 to 6, wherein the aqueous dispersion of the polymer II contains from 1 to 5 % by weight, based on the weight of the polymer II, of added polymer I.

**10.** Drying as claimed in any of claims 1 to 9, wherein the glass transition temperature of the polymer II is ≤ 50°C.

**11.** Drying as claimed in any of claims 1 to 10, wherein the polymer II in polymerized form is composed of

A) from 80 to 100 % by weight of at least one monomer selected from the group consisting of styrene, α-methyl-styrene, vinyltoluenes, esters of α,β-monoethylenically unsaturated carboxylic acids of 3 to 6 carbon atoms and alkanols of 1 to 12 carbon atoms, butadiene and vinyl and allyl esters of carboxylic acids of 1 to 12 carbon atoms and
B) from 0 to 20 % by weight of other monomers having at least one ethylenically unsaturated group.

**12.** Drying as claimed in any of claims 1 to 11, wherein the drying is effected by the spray-drying method.

**13.** Drying as claimed in claim 12, wherein the inlet temperature of the warm air stream is from 100 to 200°C and the outlet temperature of the warm air stream is from 30 to 90°C.

**14.** A polymer powder obtainable by drying as claimed in any of claims 1 to 13.

**15.** Use of a polymer I which, in polymerized form, is composed of from > 80 to 100 % by weight of at least one monomer of the formula I or a salt thereof (monomers a)

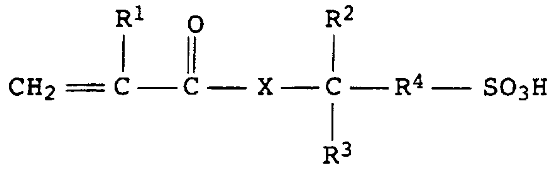

(I),

where

| | |
|---|---|
| $R^1$, $R^2$ and $R^3$, | independently of one another, are each H or $C_1$-$C_3$-alkyl, |
| $R^4$ | is $C_1$-$C_5$-alkylene and |
| X | is O or NH, |

and
from 0 to < 20 % by weight of at least one monomer capable of free radical copolymerization (monomers b), and whose relative weight average molecular weight is from 5000 to 35,000, as assistants in the drying of aqueous dispersions of polymers II which differ from polymers I.

**16.** Use of an aqueous dispersion of a polymer II, which dispersion contains an added polymer I which differs from this polymer II and, in polymerized form, is composed of from > 80 to 100 % by weight of at least one monomer of the formula I or a salt thereof (monomers a)

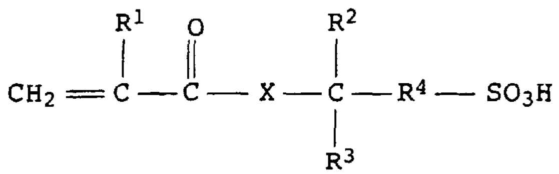

(I),

where

| | |
|---|---|
| $R^1$, $R^2$ and $R^3$, | independently of one another, are each H or $C_1$-$C_3$-alkyl, |
| $R^4$ | is $C_1$-$C_5$-alkylene and |
| X | is O or NH, |

and
from 0 to < 20 % by weight of at least one monomer capable of free radical copolymerization (monomers b), and whose relative weight average molecular weight is from 5000 to 35,000,
for the preparation of polymer powders.

**17.** A polymer powder containing at least one polymer I which, in polymerized form, is composed of from > 80 to 100 % by weight of at least one monomer of the formula I or a salt thereof (monomers a)

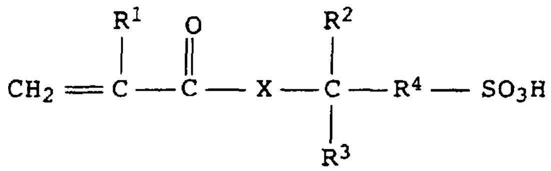

(I),

where

$R^1$, $R^2$ and $R^3$, independently of one another, are each H or $C_1$-$C_3$-alkyl,
$R^4$ is $C_1$-$C_5$-alkylene and
X is O or NH,

and
from 0 to < 20 % by weight of at least one monomer capable of free radical copolymerization (monomers b), and whose relative weight average molecular weight is from 5000 to 35,000, and at least one polymer II which differs from the polymer I.

**18.** A polymer powder as claimed in claim 17, which contains ≤ 1 % by weight, based on the amount of polymer II present, of emulsifiers.

**19.** A mineral binder containing at least one polymer powder as claimed in claim 17 or 18.

**20.** Use of a polymer powder as claimed in claim 17 or 18 in formulations for coating or adhesive bonding.

**21.** A dry synthetic resin render formulation containing at least one polymer powder as claimed in claim 17 or 18.

## Revendications

**1.** Séchage d'une dispersion aqueuse d'un polymère II, **caractérisé en ce que** la dispersion aqueuse du polymère II contient, en tant qu'adjuvant de séchage, un polymère I ajouté qui est constitué, sous forme polymérisée, d'au moins un monomère de formule générale I et/ou de ses sels (monomères a), à raison de plus de 80% à 100% en poids:

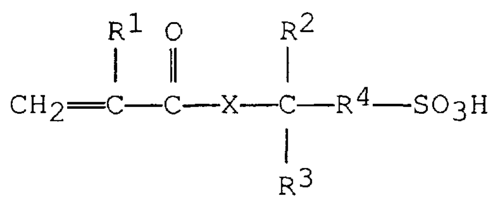

(I)

$R^1$, $R^2$ et $R^3$ représentant, indépendamment les uns des autres, un atome de H ou un groupe alkyle en $C_1$ à $C_3$,

$R^4$ représentant un groupe alkylène en $C_1$ à $C_5$, et

X représentant un atome de O ou un groupe NH,

et
d'au moins un monomère pouvant être copolymérisé par voie radicalaire (monomères b), à raison de 0% à moins de 20% en poids,
et dont la masse moléculaire moyenne en masse est comprise entre 5 000 et 35 000.

**2.** Séchage selon la revendication 1, **caractérisé en ce que** le polymère I est constitué, sous forme polymérisée, de monomères a, à raison de 90% à 100% en poids, et de monomères b, à raison de 0% à 10% en poids.

**3.** Séchage selon la revendication 1, **caractérisé en ce que** le polymère I est constitué, sous forme polymérisée, exclusivement de monomères a.

**4.** Séchage selon l'une quelconque des revendications 1 à 3, **caractérisé en ce que** le polymère I contient, sous forme polymérisée, l'acide 2-acrylamido-2-méthylpropansulfonique et/ou ses sels.

**5.** Séchage selon la revendication 3, **caractérisé en ce que** le copolymère I est constitué, sous forme polymérisée, exclusivement d'acide 2-acrylamido-2-méthylpropansulfonique et/ou de ses sels.

6. Séchage selon l'une quelconque des revendications 1 à 5, **caractérisé en ce que** la solubilité du polymère I, dans 100 g d'eau, à une température de 25°C et à une pression de 1 bar, est au moins de 10 g.

7. Séchage selon l'une quelconque des revendications 1 à 6, **caractérisé en ce que** la dispersion aqueuse du polymère II contient le polymère I ajouté à raison de 1% à 40% en poids, par rapport à la masse du polymère II.

8. Séchage selon l'une quelconque des revendications 1 à 6, **caractérisé en ce que** la dispersion aqueuse du polymère II contient le polymère I ajouté à raison de 1% à 20% en poids, par rapport à la masse du polymère II.

9. Séchage selon l'une quelconque des revendications 1 à 6, **caractérisé en ce que** la dispersion aqueuse du polymère II contient le polymère I ajouté à raison de 1% à 5% en poids, par rapport à la masse du polymère II.

10. Séchage selon l'une quelconque des revendications 1 à 9, **caractérisé en ce que** la température de transition vitreuse du polymère II est inférieure ou égale à 50°C.

11. Séchage selon l'une quelconque des revendications 1 à 10, **caractérisé en ce que** le polymère II est constitué, sous forme polymérisée,

    A) d'au moins un monomère, à raison de 80% à 100% en poids, choisi dans le groupe formé par le styrène, le $\alpha$-méthylstyrène, les toluènes vinyliques, les esters d'acides carboxyliques à insaturation $\alpha,\beta$-mono-éthylénique présentant de 3 à 6 atomes de C et d'alcanols présentant de 1 à 12 atomes de C, le butadiène, ainsi que les esters vinyliques et allyliques d'acides carboxyliques présentant de 1 à 12 atomes de C, et
    B) d'autres monomères présentant au moins un groupe à insaturation éthylénique, à raison de 0% à 20% en poids.

12. Séchage selon l'une quelconque des revendications 1 à 11, **caractérisé en ce que** l'on procède au séchage selon le procédé de séchage par pulvérisation.

13. Séchage selon la revendication 12, **caractérisé en ce que** la température d'entrée du courant d'air chaud est comprise entre 100°C et 200°C et **en ce que** la température de sortie du courant d'air chaud est comprise entre 30°C et 90°C.

14. Poudre de polymère que l'on peut obtenir au moyen d'un séchage selon l'une quelconque des revendications 1 à 13.

15. Mise en oeuvre des polymères I constitués, sous forme polymérisée,
d'au moins un monomère et/ou de ses sels, à raison de plus de 80% à 100% en poids, monomère de formule générale I (monomères a)

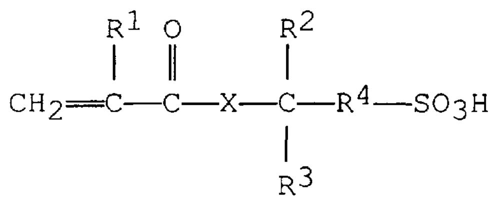

(I)

| | |
|---|---|
| $R^1$, $R^2$ et $R^3$ | représentant, indépendamment les des autres, un atome de H ou un groupe alkyle en $C_1$ à $C_3$, |
| $R^4$ | représentant un groupe alkylène en $C_1$ à $C_5$, et |
| X | représentant un atome de O ou un groupe NH, |

et
d'au moins un monomère pouvant être copolymérisé par voie radicalaire (monomères b), à raison de 0% à moins de 20% en poids,
et dont la masse moléculaire moyenne en masse est comprise entre 5 000 et 35 000,

en tant qu'adjuvants pour le séchage de dispersions aqueuses de polymères II différents des polymères I.

**16.** Mise en oeuvre d'une dispersion aqueuse d'un polymère II contenant un polymère I ajouté différent de ce polymère II et qui est constitué, sous forme polymérisée, d'au moins un monomère et/ou de ses sels, à raison de plus de 80% à 100% en poids, monomère de formule générale I (monomères a)

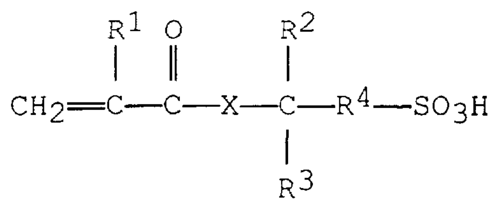

(I)

$R^1$, $R^2$ et $R^3$ représentant, indépendamment les des autres, un atome de H ou un groupe alkyle en $C_1$ à $C_3$,

$R^4$ représentant un groupe alkylène en $C_1$ à $C_5$, et

X représentant un atome de O ou un groupe NH,

et
d'au moins un monomère pouvant être copolymérisé par voie radicalaire (monomères b), à raison de 0% à moins de 20% en poids,
et dont la masse moléculaire moyenne en masse est comprise entre 5 000 et 35 000,
pour la préparation de poudres de polymère.

**17.** Poudre de polymère qui contient au moins un polymère I constitué, sous forme polymérisée,
d'au moins un monomère et/ou de ses sels, à raison de plus de 80% à 100% en poids, monomère de formule générale I (monomères a)

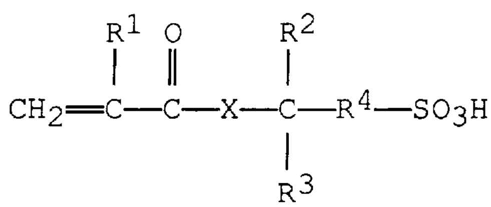

(I)

$R^1$, $R^2$ et $R^3$ représentant, indépendamment les des autres, un atome de H ou un groupe alkyle en $C_1$ à $C_3$,

$R^4$ représentant un groupe alkylène en $C_1$ à $C_5$, et

X représentant un atome de O ou un groupe NH,

et
d'au moins un monomère pouvant être copolymérisé par voie radicalaire (monomères b), à raison de 0% à moins de 20% en poids,
et dont la masse moléculaire moyenne en masse est comprise entre 5 000 et 35 000,
et au moins un polymère II différent du polymère I.

**18.** Poudre de polymère selon la revendication 17, contenant ≤1% en poids d'émulsifiants, par rapport à la quantité du polymère II contenu.

**19.** Liant minéral contenant au moins une poudre de polymère selon la revendication 17 ou 18.

**20.** Mise en oeuvre des poudres de polymère selon la revendication 17 ou 18, dans les préparations destinées au

revêtement ou au collage.

**21.** Préparation sèche d'enduit synthétique contenant au moins une poudre de polymère selon la revendication 17 ou 18.